# EUROPEAN PATENT APPLICATION

(11) **EP 1 433 806 A1**
(43) Date of publication of application: **30.06.2004**
(21) Application number: 02027018.7
(22) Date of filing: 03.12.2002
(51) Int. Cl.: C08G 63/78, C08G 63/85, C08K 5/5333, C08L 67/02, C08K 3/32, C08K 13/02

(54) **Method for decreasing the cyclic oligomer content in polyester product**

(71) Applicant: NAN YA PLASTICS CORP., Taipei (TW)
(72) Inventor: Zo-Chun, Jen, Taipei (TW)
(74) Representative: Helms, Joachim, Dipl.-Ing. Patentanwalt

(57) **Abstract**

The present invention relates to a method for decreasing the cyclic oligomer content in polyester product; during the manufacturing process of polyethylene terephthalate, adding at least one selected from the group consisting of calcium phosphate having Ca₃(PO₄)₂ or Ca₅OH(PO₄)₃ structure and of carboxy phosphonic acid having a structure (1) as follows: 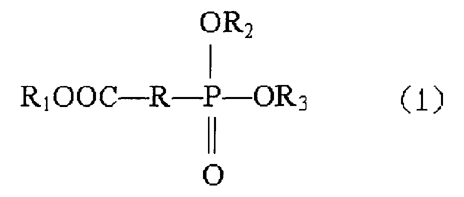 wherein R₁, R₂, and R₃ are alkyls or hydrogen atoms, R is an alkyl;
whereby not only is the production of cyclic oligomer in ester chips effectively restrained, but also the cyclic oligomer regenerated in the rear-stage melting process is decreased.

## Description

### BACKGROUNG OF THE INVENTION

### 1. Field of this invention

The present invention relates to a method for decreasing the cyclic oligomer content in polyester product, which improves the method disclosed on the US patent No. 6392005 issued to the applicant, by adding other chemicals during the production or manufacturing process of polyethylene terephthalate to further effectively restrain the cyclic oligomer residuals in polyethylene terephthalate chips and decrease the amount of regenerated cyclic oligomer at the rear-stage melting process. The aforementioned polyethylene terephthalate is capably made into products such as polyester bottle, fiber, film, and laminate through different manufacturing processes.

### 2. Description of Prior Art

Polyethylene terephthalate (PET) is well known as a heat plasticized plastic material having good physical characters and a capability of being recycled, so it is widely used in manufacturing products such as polyester bottles, polyester fiber, polyester films, and polyester laminates, which makes it a valuable plastic material.

However, during the process of manufacturing PET, some cyclic oligomers having low molecular weight, particularly those with white crystallized powder, are produced from side reaction. This sort of oligomer has a melting point of above 300°C to pollute the mold while processed and further adhere to polyester bottles; consequently, the production line needs to be shut down and cleaned from time to time. Moreover, during the high temperature heat crystallization process of manufacturing the PET into a heat-filling resistance bottle, in which the temperature of both the crystallization and the heat-filling is above 80°C, most of the residual cyclic oligomer in PET or the cyclic oligomer regenerated during processing may transfer to the surface or even enter into packaged content to hazard human health

To solve said cyclic oligomer problems, we disclose, in US patent No. 6392005, adding, during the melting process of PET, a compound (hereinafter called PI) containing phosphorus with the following structure: 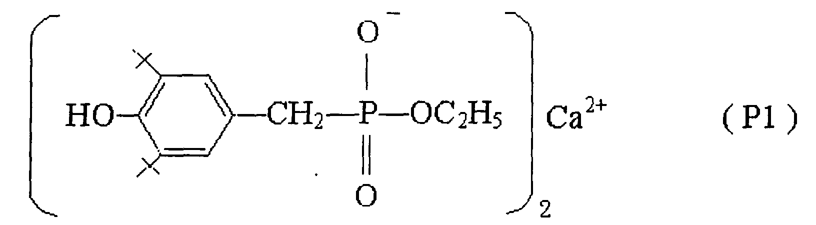 in an amount of 50 ∼ 3000 ppm based on the weight of PET to effectively decrease the cyclic oligomer content of PET chips and their processed product.

Japan publication No. 12-219731 discloses that adding SO₃X compound effectively restrains the produced cyclic oligomer content in the melted state polymerized PET.

Japan publication No. 12-204229 discloses that adding alkali metals or alkaline-earth metals such as calcium acetate or magnesium benzoate into the PET containing germanium catalyst can effectively restrain the cyclic oligomer content.

Japan publication No. 12-219729 discloses that while each mole of PET contains 0.5 X 10⁻⁴ ∼ 4 X 10⁻⁴ moles of antimony element and 1 X 10⁻⁴ ∼ 5 X 10⁻⁴ moles of phosphoric acid, wherein the mole ratio of antimony element to phosphorus element is 1 - 3, the cyclic oligomer content is effectively restrained..

Japan publication No. 12-198937 discloses that while the germanium element is 0.5 X 10⁻⁴ ∼ 4 X 10⁻⁴ moles relative to the acid component of PET, the phosphoric acid is added until the phosphorus element is 1 X 10⁻⁴ ∼ 7 X 10⁻⁴ moles relative to the acid component of PET, wherein the mole ratio of germanium element to phosphorus element is greater than 1.6, so as to effectively restrain the cyclic oligomer content.

Japan publication No. 12-80284 discloses that PET chips proceeds melt blending with heat plasticized resin masterbatch which contains one of the following three structural compounds: alkylene oxide, or polyalkylene glycol, or bisphenol. The analyzed cyclic oligomer content of the resin is lower than that of the PET obtained from the process without said compounds.

Japan publication No. 11-80520 discloses that the situation of pollution on mold during blow-molding is improved while the amide compound is added into solid state polymerized PET.

Japan publication No. 10-168168 discloses a process of producing the PET chips containing 2 ∼ 4 wt% of diethylene glycol by using an amorphous state germanium dioxide as catalyst. The time point of the addition of amorphous state germanium dioxide catalyst is while the esterification ratio reaches above 90% to reduce the production of formaldehyde, acetaldehyde, and cyclic oligomer while inject-molded.

Japan publication No. 10-110026 discloses that the addition of alkaline metals and alkaline earth metals such as lithium acetic, calcium acetic can restrain the cyclic oligomer content of ester chips and bottles thereof.

Japan publication No. 9-221540 discloses that while the DEG content of PET chips is 1 ∼ 4 mole%, and the intrinsic viscosity is 0.60 ∼ 0.90 dl/g, and the phosphoric acid content based on the weight of PET is 5 ∼ 25 ppm, and the content of germanium element based on the weight of PET is 20 ∼ 60 ppm, and the mole ratio of germanium element content to phosphorus element content is between 0.4 ∼ 1.5, said polyester has low cyclic oligomer content.

Japan publication No. 9-296029 discloses that for the PET containing germanium catalyst, while the alkaline-earth metal atom content based on PET is 1 X 10⁻⁴ ∼ 5 X 10⁻³ moles, the cyclic oligomer content in PET is low and the regenerated cyclic trimer from melting process is little.

Japan publication No. 59-25815, 3-174441, 6-234834, and 3-47830 disclose a specific process that PET is treated by boiling water, by which the residual cyclic oligomer in PET chips and the regenerated cyclic oligomer during processing can be reduced.

US patent No. 6020421 discloses a PET composition containing a metal atom A and a phosphide containing a valance of 5, wherein the metal atom A can be antimony atom, titanium atom, or germanium atom, and the phosphide can be selected from the phosphate group consisting of orthophosphoric acid salt, metaphosphoric acid salt, polymetaphosphoric acid salt (HPO₃)m (m ≧ 3), and polyphosphoric acid Hn+2PnO₃n+1(n≧2).

US patent No. 5948458 discloses the addition of phosphate into the plastic used for wrapping food has a ultraviolet ray resistance effect which prevents the food from being rotten or color-changing; however, it did not mention the effect to cyclic oligomer.

US patent No. 5744572 discloses the addition of carboxy phosphonic acid catalyzes the reaction rate of polyester; however, it did not mention the effect to cyclic oligomer.

The aforementioned prior arts did not mention the addition of calcium phosphate having Ca₃(PO₄)₂ or Ca₅OH(PO₄)₃ structure, or the addition of phosphoric ester having structure (1), or the addition of two or more than two compounds simultaneously in order to restrain the cyclic oligomer content in PET chips and processed products thereof.

### SUMMARY OF THIS INVENTION

The present invention discloses adding, during manufacturing process of PET chips, at least one selected from the group consisting of calcium phosphate having Ca₃(PO₄)₂ or Ca₅OH(PO₄)₃ structure and of carboxy phosphonic acid having a structure (1) as follows: 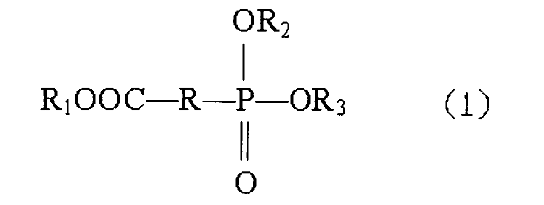 wherein R₁, R₂, and R₃ are alkyls or hydrogen atoms, R is an alkyl;
the obtained PET chips and the manufactured product thereof contain less cyclic oligomer than that of US patent No. 6392005; the addition of calcium phosphate or carboxy phosphonic acid having structure (1) into the polymerization reaction stage for manufacturing PET decreases the cyclic oligomer residuals in PET chips and effectively restrains the regeneration of cyclic oligomer during processing.

The preferred embodiment of the present invention is that adding calcium phosphate and compound having structure (1) simultaneously during melt-polymerization reaction stage of manufacturing polyester chips, the obtained polyester and product thereof contain less cyclic oligomer content than that of US patent No. 6392005.

The most preferred embodiment of the present invention is that adding calcium phosphate and compound having structure (1) and the PI compound disclosed in our US patent No. 6392005, the cyclic oligomer content in the obtained PET chips and processed product thereof can be further decreased; particularly, using the skill disclosed by the present invention appropriately decreases the addition amount of PI disclosed in US patent No. 6392005, which has an advantage of lower cost.

### DETAILED DESCRITION OF THIS INVENTION AND THE PREFERRED EMBODIMENTS

The PET of the present invention can be obtained from the synthesis of PTA process in which purified terephthalic acid and ethylene glycol proceed with direct esterification and then melted polymerization, or from the synthesis of DMT process in which dimethyl terephthalate and ethylene glycol proceed with transesterification and then melted polymerization. The viscosity of PET obtained from each of said processes is further increased to an appropriate level by solid state polymerization. The PTA process is preferable for the present invention.

The present invention adds, before completion of the melting polymerization reaction of synthesizing PET, at least one selected from the group consisting of calcium phosphate having Ca₃(PO₄)₂ or Ca₅OH(PO₄)₃ structure and of carboxy phosphonic acid having a structure (1) as follows: 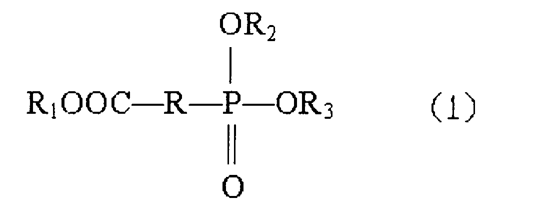 wherein R₁, R₂, and R₃ are alkyls or hydrogen atoms, R is an alkyl;

The calcium phosphate and carboxy phosphonic acid compound of the present invention can be injected into the slurry of PTA and EG, or be injected during esterification stage, or be injected during polymerization reaction stage.

While adding calcium phosphate without the addition of carboxy phosphonic acid compound having structure (1) and the PI compound of US patent No. 6392005, the amount of added calcium phosphate is more preferably 50 ∼500 ppm based on the weight of PET polymer, most preferably 100 ∼ 450 ppm based on the weight of PET polymer.

While adding the compound having structure (1) without the addition of calcium phosphate and the PI compound of US patent No. 6392005, the amount of added compound having structure (1) is more preferably 100 ∼ 700 ppm based on the weight of PET polymer, most preferably 100 ∼ 400 ppm based on the weight of PET polymer.

While adding calcium phosphate, compound having structure (1), and the PI compound of US patent No. 6392005 simultaneously, the more preferable composition is: the amount of added calcium phosphate is preferably 100 ∼ 300 ppm based on the weight of PET polymer, the amount of added carboxy phosphonic acid compound having structure (1) is preferably 100 ∼ 200 ppm based on the weight of PET polymer, and the amount of added PI compound is preferably 100 ∼ 500 ppm based on the weight of PET polymer.

The compound of Ca₃(PO₄)₂ of calcium phosphate used in the present invention has better effect on restraining the production of cyclic oligomer.

The compound having structure (1) of the present invention is preferably a compound called triethyl phosphonoacetate ( hereinafter called TEPA) having a structure (2) as follows:

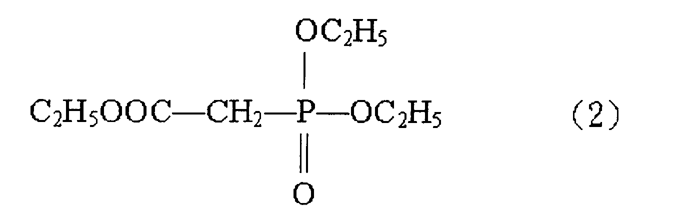

Based on the requirement of product application of the present invention, a heat stabilizer, a toner or a dye, a ultraviolet ray absorbent, a crystallization accelerator, a static electricity preventer, an oxidization resistant or a lubricant can be added.

The catalyst for PET of the present invention is antimony catalyst such as antimony trioxide, or antimony acetate, the antimony content being no more than 300 ppm based on the weight of PET, or is germanium dioxide catalyst having the germanium content being no more than 100 ppm, or is titanium catalyst having the titanium content being no more than 10 ppm based on the weight of PET.

The PET of the present invention can be either homogeneous polymer or copolymer, adding dicarboxylic acid or diol compound such as diethylene glycol (DEG), isophthalic acid (IPA), 2,6-naphthalene dicarboxylic acid, and cyclohexane dimethanol (CHDM).

The PET of the present invention is first manufactured to chips with intrinsic viscosity of 0.45 ∼ 0.65 dl/g by melted state polymerization, more preferably 0.57 ∼ 0.63 dl/g; then, the intrinsic viscosity of which is increased to above 0.70 by solid state polymerization. The solid state polymerization can utilize stir-batch type of operation at vacuum environment or utilize continuous tower tank through which an inert gas such as nitrogen gas or carbon dioxide is led.

The present invention accomplishes further decreasing and restraining the cyclic oligomer content in PET chips and in the processed production thereof by adding at least one selected from the group consisting of calcium phosphate having Ca₃(PO₄)₂ or Ca₅OH(PO₄)₃ structure and of carboxy phosphonic acid compound having structure (1).

### Examples

The PET of the present invention, after solid state polymerization to the level of preset intrinsic viscosity, is analyzed the residual cyclic oligomer content.

The PET of the present invention is manufactured, by an injector with model of ASB 50H, into bottle embryo which is then analyzed the cyclic oligomer regenerated from melting process.

The method of analyzing cyclic oligomer for the present invention is as follows: Accurately weighing 1000 grams of sample. Dissolving the sample into a transparent solution by hexafluoro-isopropanol solvent. Filtering the solution. The filtrate is then evaporated to obtain white crystallized powder of cyclic oligomer. The obtained white powder is dissolved into a transparent solution by dioxane and then analyzed by a high efficient liquid chromatographer to measure the respective content of cyclic trimer, cyclic tetramer, cyclic pentamer, cyclic hexamer, cyclic heptamer, wherein mainly the cyclic trimer. The content of cyclic oligomer is the summation of said cyclic tri-, tetra-, penta-, hexa-, hepta-mers.

### Example 1

Taking PTA and EG as raw materials. The quantity of PTA is 10.38 kg. The added mole ratio of EG/PTA is 1.5. Blending into slurry and adding phosphoric acid with an amount of 140 ppm based on the weight of polymer. Raising the temperature up to 200°C ∼ 250°C. Proceeding with esterification for 4 hours under reaction pressure of 1.5 ∼ 2.0 Kg/cm². While the esterification ratio has reached over 95 %, adding PI compound (Brand name: Irganox-1425, source: Ciba Corp.), calcium phosphate Ca₃(PO₄)₂, and germanium dioxide catalyst respectively, the amount of added Irganox-1425 being 1000 ppm based on the weight of polymer, the amount of added Ca₃(PO₄)₂ being 200 ppm based on the weight of polymer, and the amount of added germanium dioxide catalyst being 140 ppm based on the weight of polymer. After the addition of aforementioned additives, vacuum polymerization reaction is proceeded. The first stage polymerization reaction takes one hour, reaction pressure decreasing from normal pressure down to 10 torr, reaction temperature being 250°C ∼ 270°C. The second stage polymerization reaction decreases the vacuum intensity down to below 1 torr, reaction temperature being 270°C ∼ 285°C, stirring speed decreasing gradually along with the raising of viscosity. The reaction stops when the intrinsic viscosity reaches 0.60 dl/g, the polymer being unloaded to cooling water tank and cut into column shape raw polyester chips by cutting machine.

Said raw chips are loaded in a twin-awl revolving vacuum drying tank. Vacuum intensity in the tank is about 1 torr. The polyester chips are heated by the following steps: first, 130°C for two hours, then raising the temperature to 180°C and crystallizing for three hours, then raising the heating temperature to 230°C and while the material temperature reaches 200°C, maintaining this temperature for 20 hours, then cooling down immediately so as to obtain the PET chips of the present invention. Analyzing their intrinsic viscosity and cyclic trimmer content thereof.

Said chips are manufactured into bottles of 2 litters by ASB-50 inject-blow-molding machine; cyclic trimmer content of bottles is analyzed.

Analyzed results are listed in Table 1, wherein the amounts of added additives are all calculated based on the weight of polymer.

### Example 2

Process is the same as that of Example 1, however, only adding calcium phosphate Ca₃(PO₄)₂ in an amount of 450 ppm based on the weight of polymer, and without the addition of PI compound and carboxy phosphonic acid having structure (1).

After solid phase polymerization reaction and inject-blow-molding as Example 1, the results are listed in Table 1.

### Example 3

Process is the same as that of Example 1, however, only adding PI compound Irganox-1425 in an amount of 1000 ppm and carboxy phosphonic acid having structure (1) (TEPA) in an amount of 150 ppm, and without the addition of calcium phosphate.

After solid phase polymerization reaction and inject-blow-molding as Example 1, the results are listed in Table 1.

### Example 4

Process is the same as that of Example 1, however, only adding PI compound Irganox-1425 in an amount of 500 ppm and calcium phosphate Ca₃(PO₄)₂ in an amount of 350 ppm, and without the addition of carboxy phosphonic acid having structure (1).

After solid phase polymerization reaction and inject-blow-molding as Example 1, the results are listed in Table 1.

### Example 5

Process is the same as that of Example 1, however, adding PI compound Irganox-1425 in an amount of 500 ppm, calcium phosphate Ca₃(PO₄)₂ in an amount of 300 ppm, and carboxy phosphonic acid having structure (1)(TEPA) in an amount of 150 ppm.

After solid phase polymerization reaction and inject-blow-molding as Example 1, the results are listed in Table 1.

### Example 6

Process is the same as that of Example 1, however, only adding PI compound Irganox-1425 in an amount of 500 ppm and calcium phosphate Ca₅OH(PO₄)₃ in an amount of 300 ppm, and without the addition of carboxy phosphonic acid having structure (1).

After solid phase polymerization reaction and inject-blow-molding as Example 1, the results are listed in Table 1.

### Comparative Example 1

Process is the same as that of Example 1, however, without adding PI compound, calcium phosphate, and carboxy phosphonic acid having structure (1).

After solid phase polymerization reaction and inject-blow-molding as Example 1, the results are listed in Table 1.

### Comparative Example 2

Process is the same as that of Example 1, however, only adding PI compound in an amount of 1000 ppm, and without the addition of calcium phosphate, and carboxy phosphonic acid having structure (1).

After solid phase polymerization reaction and inject-blow-molding as Example 1, the results are listed in Table 1.

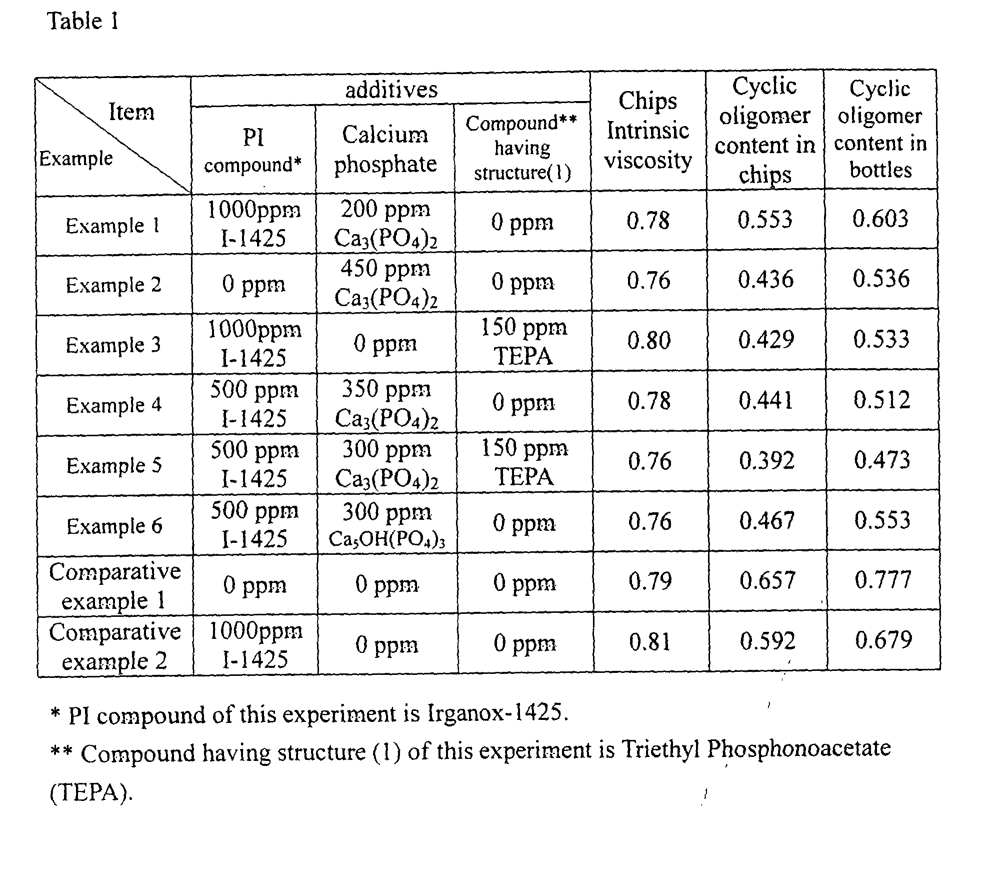

## Claims

1. A method for decreasing the cyclic oligomer content in polyester product, which is:
during the manufacturing process of polyethylene terephthalate, adding at least one selected from the group consisting of calcium phosphate having Ca₃(PO₄)₂ or Ca₅OH(PO₄)₃ structure and of carboxy phosphonic acid having a structure (1) as follows: 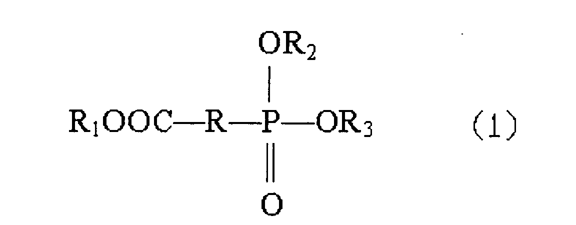 wherein R₁, R₂, and R₃ are alkyls or hydrogen atoms, R is an alkyl;
the amount of added calcium phosphate is 50 ∼ 500 ppm based on the weight of PET polymer, and the amount of added structure (1) compound is 100 ∼ 700 ppm based on the weight of PET polymer.

2. A method for decreasing the cyclic oligomer content in, polyester product, which is:
during the manufacturing process of polyethylene terephthalate, adding calcium phosphate, carboxy phosphonic acid, and PI compound simultaneously, said carboxy phosphonic acid having a structure (1) as follows: 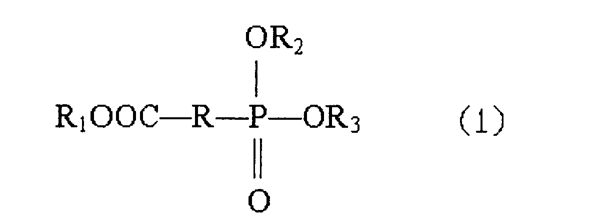 ,wherein R₁, R₂, and R₃ are alkyls or hydrogen atoms, R is an alkyl, and
said PI compound having a structure as follows: 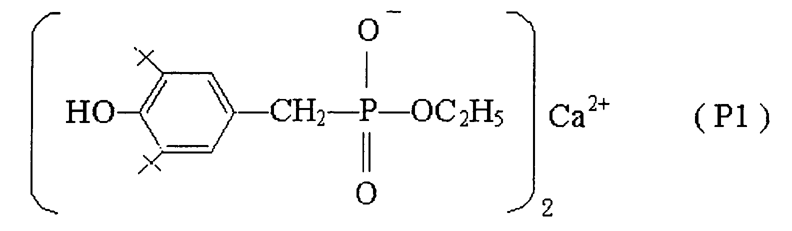 ;the amount of added calcium phosphate is 100 ∼ 300 ppm based on the weight of PET polymer, and the amount of added carboxy phosphonic acid having structure (1) compound is 100 ∼ 200 ppm based on the weight of PET polymer, and the amount of added PI compound is 100 ∼ 500 ppm based on the weight of PET polymer.

3. A method for decreasing the cyclic oligomer content in polyester product as defined in claim 1, wherein the intrinsic viscosity of the obtained PET chips is increased up to above 0.70 dl/g after solid phase polymerization.

4. A method for decreasing the cyclic oligomer content in polyester product as defined in claim 1, wherein the polycondensation catalyst used in the melting process of polyethylene terephthalate can be chosen from the group consisting of antimony catalyst such as antimony trioxide, antimony acetate, and of germanium catalyst such as germanium dioxide, tetraethyl germanium oxide, n-tetrabutyl germanium oxide, and of titanium catalyst such as tetrabutyl titanium oxide.

5. A bottle embryo, which is made from the d polyester chips directly derived from the method as defined in claim 1 through an injection machine.

6. A bottle, which is made from the bottle embryo as defined in claim 5 through stretch-blow-molding.
